(19) **Europäisches Patentamt**
**European Patent Office**
**Office européen des brevets**

(11) **EP 4 446 909 A1**

(12) **EUROPEAN PATENT APPLICATION**
published in accordance with Art. 153(4) EPC

(43) Date of publication:
**16.10.2024 Bulletin 2024/42**

(21) Application number: **22920083.7**

(22) Date of filing: **29.12.2022**

(51) International Patent Classification (IPC):
**G06F 17/15** (2006.01)

(52) Cooperative Patent Classification (CPC):
**G06F 8/41; G06F 17/15; G06N 3/0464; G06N 3/084**

(86) International application number:
**PCT/CN2022/143087**

(87) International publication number:
**WO 2023/134453 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.01.2022 CN 202210049301**

(71) Applicant: **Huawei Technologies Co., Ltd.
Shenzhen, Guangdong 518129 (CN)**

(72) Inventors:
• **ZHOU, Qing
Shenzhen, Guangdong 518129 (CN)**
• **YU, Feng
Shenzhen, Guangdong 518129 (CN)**
• **HE, Jian
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **OPERATOR PROCESSING METHOD AND COMPUTER DEVICE**

(57) Embodiments of this application disclose an operator processing method and a computer device, which may be applied to the field of artificial intelligence, and may be specifically applied to a dynamic shape scenario. The method includes: A real-time shape of any to-be-output first tensor can be obtained by combining in real time one or more micro-operators in a micro-operator library that is constructed in advance. Then, a micro-operator included in one combination is selected (for example, a combination with optimal performance is selected) for execution because different combinations have different performance. Micro-operators in the micro-operator library are pre-compiled. Therefore, a compiler is not needed. This reduces compilation overheads, and avoids excessively high compilation overheads of a just-in-time compilation technology at runtime. In addition, shapes of the micro-operators are fixed and different, and are used as a "basis" of "shape space". Therefore, any shape may be a combination of the one or more micro-operators in the micro-operator library, and programmability is high in the dynamic shape scenario. In addition, a quantity of micro-operators in the micro-operator library is limited, and a size of memory space is small.

FIG. 10

EP 4 446 909 A1

**EP 4 446 909 A1**

## Description

This application claims priority to Chinese Patent Application No. 202210049301.8, filed with the China National Intellectual Property Administration on January 17, 2022 and entitled "OPERATOR PROCESSING METHOD AND COMPUTER DEVICE", which is incorporated herein by reference in its entirety.

## TECHNICAL FIELD

This application relates to the field of machine learning, and in particular, to an operator processing method and a computer device.

## BACKGROUND

Just-in-time (just-in-time, JIT) compilation is a widely used compilation technology. To be specific, the just-in-time compilation is a process in which a compiler is immediately invoked at runtime (runtime), to perform standard compilation (including front-end lexical/syntactical analysis, intermediate representation analysis, running cost estimation based on a cost model, back-end code generation, and the like) on a specified task, and generate and execute binary code (binary code).

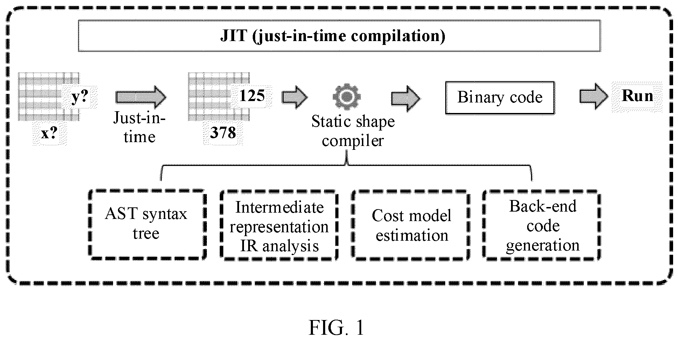

FIG. 1 describes a process of applying the just-in-time compilation technology in a dynamic shape scenario. A literal meaning of the shape is a shape. In applications such as artificial intelligence (artificial intelligence, AI) and high-performance computing (high performance computing, HPC), computationally intensive operations (referred to as operators) such as matrix multiplication, convolution, and vector operations are required. These operators are mathematical function computation of a multi-dimensional array (or referred to as tensor (tensor)). Each dimension of the multi-dimensional array has a specific value, for example, a height H and a width W of a two-dimensional array, and a height H, a width W, and a depth D of a three-dimensional array. Values of these different dimensions are collectively referred to as a shape, namely, the shape of the multi-dimensional array (namely, tensor). In FIG. 1, due to the dynamic shape scenario, a shape of a specific to-be-output tensor cannot be known in advance (for example, before neural network training). In other words, because the shape of the tensor changes in real time, the binary code cannot be pre-compiled from an operator (such as a convolution operator) of a corresponding layer. Herein, that the binary code cannot be pre-compiled specifically means a scenario in which a static shape compiler is used. However, a specific value of the shape of the tensor is determined at runtime. To be specific, when a specific operator is calculated at the runtime, a system knows a value of a shape of a to-be-output tensor at a current moment. For example, in FIG. 1, at the runtime, the system knows that the shape of the to-be-output tensor is one 378 * 125 matrix. Therefore, determined 378 * 125 shape information is sufficient for the static shape compiler. To be specific, the system pauses calculation (actually, calculation cannot be performed at this moment, because there is no binary code of an operator that supports the 378 * 125 matrix shape), actively invokes the static shape compiler to correspondingly compile the operator that supports the 378 * 125 tensor, and generates binary code for use.

Time consumption of invoking the static shape compiler in just-in-time compilation to generate binary code of an operator whose shape is consistent with the shape of the to-be-output tensor is at a second level (generally within 10 seconds), and calculation overheads of one operator (for example, convolution) are at a microsecond level to a millisecond level, that is, compilation overheads of just-in-time compilation are excessively high in an entire calculation process. In addition, in the dynamic shape scenario, the static shape compiler may be invoked for hundreds of thousands of times, and overall calculation performance of the system is severely affected by just-in-time compilation.

## SUMMARY

Embodiments of this application provide an operator processing method and a computer device. A real-time shape of any to-be-output first tensor can be obtained by combining in real time one or more micro-operators in a micro-operator library that is constructed in advance. Finally, a micro-operator included in one combination is selected (for example, a combination with optimal performance is selected) for execution because different combinations have different performance. This indirectly improves system performance. In embodiments of this application, micro-operators in the micro-operator library are pre-compiled. Therefore, a compiler is not needed. This reduces compilation overheads, avoiding excessively high compilation overheads of a just-in-time compilation technology at runtime. In addition, shapes of the micro-operators are fixed and different, and are used as a "basis" of "shape space". Therefore, any shape may be a combination of the one or more micro-operators in the micro-operator library, providing completeness in solution space, and programmability is high in a dynamic shape scenario. In addition, a quantity of micro-operators in the micro-operator library is limited, and a size of memory space is small.

In view of this, embodiments of this application provide the following technical solutions.

According to a first aspect, an embodiment of this application first provides an operator processing method, which may be applied to the field of artificial intelligence, and may be specifically applied to a dynamic shape scenario. For example, a common Kalman filtering (constant velocity, CV) model (such as a detection, segmentation, speech model, an automatic speech recognition (Automatic Speech Recognition, ASR) model, or a natural language processing (natural language processing, NLP) model) involves a dynamic shape problem in training and inference. The method includes: obtaining a shape of a to-be-output tensor (that is, from an output perspective), where the to-be-output tensor may be referred to as a first tensor. After a first shape of the to-be-output first tensor is obtained, at least one combination that meets the first shape is further determined. Each combination includes at least one target micro-operator, and each target micro-operator is from a same micro-operator library. It should be noted herein that micro-operators in the micro-operator library are pre-compiled micro-operators, and each micro-operator is an event independent of each other. It should be noted that in some implementations, any shape of the tensor can be obtained by combining one or more micro-operators in the micro-operator library. In other words, the micro-operator library has completeness of "solution space", and each micro-operator in the micro-operator library may be considered as a "basis" of "shape space". There may be one or more combinations of target micro-operators that are selected from the micro-operator library, to form the first shape. If there are n combinations, a micro-operator (which may be referred to as a first micro-operator) included in a first combination is selected from the n combinations for execution. The first micro-operator is one or more of the target micro-operators.

In the foregoing implementation of this application, a real-time shape of any to-be-output first tensor can be obtained by combining in real time one or more micro-operators in a micro-operator library that is constructed in advance. Finally, a micro-operator included in one combination is selected (for example, a combination with optimal performance is selected) for execution because different combinations have different performance. This indirectly improves system performance. In embodiments of this application, micro-operators in the micro-operator library are pre-compiled. Therefore, a compiler is not needed. This reduces compilation overheads, avoiding excessively high compilation overheads of a just-in-time compilation technology at runtime. In addition, shapes of the micro-operators are fixed and different, and are used as a "basis" of "shape space". Therefore, any shape may be a combination of the one or more micro-operators in the micro-operator library, providing completeness in solution space, and programmability is high in a dynamic shape scenario. In addition, a quantity of micro-operators in the micro-operator library is limited, and a size of memory space is small.

In a possible implementation of the first aspect, a final first combination may be selected from the n combinations based on a perspective of a consumed running cost. Specifically, first, a total running cost (cost) of micro-operators included in each of the n combinations can be calculated, to obtain n running costs. Then, one running cost that meets a preset condition (which may be referred to as a first preset condition) is selected from the n running costs as a final running cost (namely, a first running cost). For example, a combination with a smallest running cost value can be selected as the first combination, and finally, the micro-operator (namely, the first micro-operator) included in the first combination corresponding to the first running cost is executed.

In the foregoing implementation of this application, that the final first combination is selected from the n combinations based on the running cost is specifically described. A combination with a small running cost value is obtained by estimating a running cost of a micro-operator included in each combination. This improves system performance.

In a possible implementation of the first aspect, the running cost may be indicated by total duration required to execute micro-operators included in the combination. Specifically, duration required to execute each of m micro-operators included in a target combination is calculated, to obtain m duration, where one micro-operator in the target combination corresponds to one duration. Then, total duration is obtained based on the m duration (that is, the total duration is obtained by adding the m duration), where the target combination is any one of the n combinations, and m ≥ 1. Finally, total duration is calculated by using each of the n combinations as the target combination, to obtain n total duration.

In the foregoing implementation of this application, a running cost of a micro-operator included in each combination is indicated by total duration required to execute all micro-operators in the combination. This is feasible.

In a possible implementation of the first aspect, each micro-operator in the micro-operator library has a fixed shape, and different micro-operators have different shape sizes.

The foregoing implementation of this application describes a prerequisite to be met by the micro-operator in the micro-operator library, to obtain any shape of the first tensor by combining as few micro-operators as possible. This reduces memory overheads.

In a possible implementation of the first aspect, the micro-operator library is selected from a plurality of candidate micro-operator libraries that are constructed in advance, operator types of micro-operators from different micro-operator libraries are different, and operator types of micro-operators from the same micro-operator library are the same. For example, it is assumed that there are three micro-operator libraries (namely, candidate micro-operator libraries) deployed on a computer device: micro-operator libraries A, B, and C. The micro-operator library A is used to perform a convolution operation, the micro-operator library B is used to perform a matrix multiplication operation, and the micro-operator library C is used to perform a vector addition operation. In this case, each micro-operator in the micro-operator library A is a convolution operator, and each micro-operator in the micro-operator library B is a matrix multiplication operator, each micro-operator in the micro-operator library C is a vector addition operator. It is also assumed that a currently ongoing task is a training process of a convolutional neural network, and a currently invoked micro-operator library is the micro-operator library A in the foregoing three micro-operator libraries that are constructed in advance on the computer device (if the computer device has only one micro-operator library, the currently invoked micro-operator library can only be the one micro-operator library).

In the foregoing implementation of this application, that the micro-operator library may be selected from the candidate micro-operator libraries that are constructed is specifically described. This is widely applicable and flexible.

In a possible implementation of the first aspect, shapes of the micro-operators in the micro-operator library are fixed and different, but particular. In this embodiment of this application, it is assumed that all the micro-operators in the micro-operator library are second-order tensors, so that all the micro-operators in the micro-operator library may be in a square shape, or may be in a rectangular shape, or may include both a square and a rectangle. This is not limited in this application, provided that any shape of the tensor can be obtained by combining the one or more micro-operators in the micro-operator library.

In the foregoing implementation of this application, that the micro-operators in the micro-operator library may be in various shapes is described. This is flexible.

In a possible implementation of the first aspect, because each micro-operator in the micro-operator library has a fixed shape (namely, a static shape), each micro-operator may be continuously optimized to obtain optimal performance, and a micro-operator with optimal performance is added to the micro-operator library, that is, each micro-operator in the micro-operator library is selected from at least two candidate micro-operators, shapes of the at least two candidate micro-operators are the same, and the at least two candidate micro-operators are pre-compiled.

In the foregoing implementation of this application, that each micro-operator in the micro-operator library is also obtained through continuous optimization and selection is specifically described. This is implementable.

In a possible implementation of the first aspect, a selection manner may include: calculating performance of each candidate micro-operator based on attribute information of each candidate micro-operator, and using a target candidate micro-operator as one micro-operator in the micro-operator library. The target candidate micro-operator is one candidate micro-operator whose performance meets a preset condition (which may be referred to as a second preset condition). For example, a micro-operator with optimal performance is selected from the candidate micro-operators and added to the micro-operator.

In the foregoing implementation of this application, that the micro-operator whose performance meets a requirement, for example, the micro-operator with the optimal performance, is selected as each micro-operator in the micro-operator library is specifically described. This indirectly improves overall system performance.

In a possible implementation of the first aspect, the attribute information of the candidate micro-operator includes but is not limited to a throughput, occupied bandwidth, and the like. For example, the micro-operator with the optimal performance may be selected from the candidate micro-operators based on two factors: the throughput and the occupied bandwidth. The micro-operator is added to the micro-operator library. In an example, some candidate micro-operators that do not meet a throughput requirement may be first screened out from the candidate micro-operators based on the throughput factor, and then a micro-operator finally added to the micro-operator library is selected from remaining candidate micro-operators based on the bandwidth occupation factor. In another example, different weights may be assigned to the two factors: the throughput and the occupied bandwidth, weighted summation is performed on each candidate micro-operator, and finally, a candidate micro-operator with an optimal result is selected based on a weighted summation result, and added to the micro-operator library. A specific implementation of how to select the micro-operator from the candidate micro-operators and add the candidate micro-operator to the micro-operator library is not limited in this application.

The foregoing implementation of this application specifically describes the specific attribute information of the micro-operator. This is universally applicable.

In a possible implementation of the first aspect, the shape of the first tensor dynamically changes in the dynamic shape scenario. To be specific, the first tensor is a dynamic shape tensor to be output, and a specific value of the shape of the first tensor is determined only at the runtime. The shape with the specific value is referred to as the first shape of the first tensor.

In the foregoing implementation of this application, that the first tensor may be the to-be-output tensor in the dynamic shape scenario is specifically described. This is widely applicable.

According to a second aspect, an embodiment of this application provides a computer device, and the computer device has a function of performing the method according to any one of the first aspect or the possible implementations of the first aspect. The function may be implemented by hardware, or by hardware executing corresponding software. The hardware or the software includes one or more modules corresponding to the foregoing function.

According to a third aspect, an embodiment of this application provides a computer device. The computer device may include a memory, a processor, and a bus system. The memory is configured to store a program. The processor is configured to invoke the program stored in the memory, to perform the method in any one of the first aspect or the possible implementations of the first aspect of an embodiment of this application.

According to a fourth aspect, an embodiment of this application provides a computer-readable storage medium. The computer-readable storage medium stores instructions. When the instructions are run on a computer, the computer is enabled to perform the method according to any one of the first aspect or the possible implementations of the first aspect.

According to a fifth aspect, an embodiment of this application provides a computer program. When the computer program is run on a computer, the computer is enabled to perform the method according to any one of the first aspect or the possible implementations of the first aspect.

According to a sixth aspect, an embodiment of this application provides a chip. The chip (for example, a CPU) includes at least one processor and at least one interface circuit. The interface circuit is coupled to the processor. The at least one interface circuit is configured to: perform receiving and sending functions, and send instructions to the at least one processor. The at least one processor is configured to run a computer program or the instructions, and has a function of performing the method in any one of the first aspect or the possible implementations of the first aspect. The function may be implemented by hardware, software, or a combination of hardware and software. The hardware or the software includes one or more modules corresponding to the function. In addition, the interface circuit is configured to communicate with another module outside the chip. For example, the interface circuit may send, to a GPU for execution, a first micro-operator included in a first combination obtained by the processor on the chip.

**BRIEF DESCRIPTION OF DRAWINGS**

FIG. 1 is a schematic flowchart of applying a just-in-time compilation technology in a dynamic shape scenario;
FIG. 2 is a schematic diagram of a dynamic shape decoupled architecture according to an embodiment of this application;
FIG. 3 is a schematic diagram of a product form according to an embodiment of this application;
FIG. 4 is a schematic flowchart of an operator processing method according to an embodiment of this application;
FIG. 5 is a schematic diagram of a micro-operator library according to an embodiment of this application;
FIG. 6 is a schematic diagram of a specific shape of a micro-operator included in a micro-operator library according to an embodiment of this application;
FIG. 7 is a schematic diagram of compiling an operator according to an embodiment of this application;
FIG. 8 is another schematic diagram of compiling an operator according to an embodiment of this application;
FIG. 9 is a schematic diagram of combining and calculating a running cost in real time according to an embodiment of this application;
FIG. 10 is a schematic diagram of an instance of an operator processing method according to an embodiment of this application;
FIG. 11 is a schematic diagram of an application architecture according to an embodiment of this application;
FIG. 12 is a schematic diagram of a structure of a computer device according to an embodiment of this application; and
FIG. 13 is a schematic diagram of a structure of a computer device according to an embodiment of this application.

**DESCRIPTION OF EMBODIMENTS**

Embodiments of this application provide an operator processing method and a computer device. A real-time shape of any to-be-output first tensor can be obtained by combining in real time one or more micro-operators in a micro-operator library that is constructed in advance. Finally, a micro-operator included in one combination is selected (for example, a combination with optimal performance is selected) for execution because different combinations have different performance. This indirectly improves system performance. In embodiments of this application, micro-operators in the micro-operator library are pre-compiled. Therefore, a compiler is not needed. This reduces compilation overheads, avoiding excessively high compilation overheads of a just-in-time compilation technology at runtime. In addition, shapes of the micro-operators are fixed and different, and are used as a "basis" of "shape space". Therefore, any shape may be a combination of the one or more micro-operators in the micro-operator library, providing completeness in solution space, and programmability is high in a dynamic shape scenario. In addition, a quantity of micro-operators in the micro-operator library is limited, and a size of memory space is small.

In the specification, claims, and the accompanying drawings of this application, the terms such as "first" and "second" are intended to distinguish similar objects but do not necessarily indicate a specific order or sequence. It should be understood that the terms used in such a way are interchangeable in proper circumstances, and this is only a discrimination manner for describing objects having a same attribute in embodiments of this application. In addition, the terms "include" and "contain" and any other variants mean to cover the non-exclusive inclusion, so that a process, method, system, product, or device that includes a series of units is not necessarily limited to those units, but may include other units not expressly listed or inherent to such a process, method, product, or device.

Embodiments of this application relate to much related knowledge about an operator, a dynamic shape, just-in-time compilation, and the like. To better understand the solutions in embodiments of this application, the following first describes related terms and concepts that may be used in embodiments of this application. It should be understood that explanations of related concepts may be limited due to specific cases of embodiments of this application, but this does not mean that this application is limited to the specific cases. Specific cases in different embodiments may also vary. This is not specifically limited herein.

(1) Operator (operator)

The operator is a general term of a mathematical operation, such as a convolution operator, and a matrix multiplication operator. Specifically, the operator may be considered as mapping from one function space to function space, that is, O: X→X. The operator in a broad sense can be extended to any space, such as inner product space.

(2) Tensor (tensor)

In the field of artificial intelligence, the tensor is a multi-dimensional array. Specifically, the tensor may also be defined, given a basis, as a group of numbers that meet a specific transformation rule. If these numbers are written in a vertical row, these numbers are a first-order tensor. If these numbers are written in one two-dimensional array of numbers, these numbers are a second-order tensor. If these numbers are written in a three-dimensional array of numbers, these numbers are a third-order tensor. A tensor of order higher than three may be referred to as a higher order tensor.

(3) Shape (shape) of a tensor

A literal meaning of the shape is a shape. In applications such as AI and HPC, computationally intensive operations (referred to as operators) such as matrix multiplication, convolution, and vector operations are required. These operators are mathematical function computation of a multi-dimensional array (namely, the tensor). Each dimension of the multi-dimensional array has a specific value, for example, a height H and a width W of a two-dimensional array, and a height H, a width W, and a depth D of a three-dimensional array. Values of these different dimensions are collectively referred to as a shape, namely, the shape of the multi-dimensional array (namely, the tensor).

The shape of the tensor is a shape assigned to the tensor when the tensor is defined. For example, a shape of a 5 * 5 matrix is that a length is 5 and a width is 5. For another example, a tensor of a convolution kernel (filter) used for convolution calculation is defined as 3 * 3, and a shape of the tensor is that a length is 3 and a width is 3. In an example, it is assumed that a shape of a pixel of a convolved picture is 6 * 6, a depth is 3 (indicating R/G/B, which are three primary colors), and a convolution kernel is a 3 * 3 * 3 cube. In this case, the convolution kernel is a tensor of shape (3, 3, 3), and may be denoted as Tensor1. The convolved picture may be indicated as a tensor of shape (6, 6, 3), and may be denoted as Tensor2. An operation of performing a convolution operation on the two tensors Tensor1 and Tensor2 is referred to as one operator, denoted as convolution.

(4) Dynamic shape of a tensor

Each tensor indicates a physical meaning, for example, a pixel or a convolution kernel of a picture. If a shape of a to-be-output tensor of each layer does not change in a model training or inference calculation process, an operator used in this calculation process may be referred to as a fixed shape operator, and the to-be-output tensor is a fixed shape tensor. On the contrary, if a shape of a to-be-output tensor at each layer can change in a model training or inference calculation process, an operator used in this calculation process may be referred to as a dynamic shape operator, and the to-be-output tensor is a dynamic shape tensor.

(5) Static compiler (static compiler)

The static compiler means that a compilation process is completed within an off-line (off-line) time life cycle. Binary code is generated during compilation. The binary code is executed by a processor at runtime (runtime).

(6) JIT compiler (JIT compiler)

The JIT compiler means that a compilation process is completed within a life cycle at runtime (runtime). The binary code generated during compilation is temporarily generated at the runtime (runtime).

(7) Static shape compiler (static shape compiler)

The static shape compiler can also be referred to as a fixed shape compiler, and is a static compiler that only supports compiling a fixed shape operator.

(8) Dynamic shape compiler (dynamic shape compiler)

The dynamic shape compiler is a static compiler that supports compiling an operator of any shape.

(9) Neural network

The neural network may include a neural unit, and may be specifically understood as a neural network including an input layer, a hidden layer, and an output layer. Usually, a first layer is the input layer, a last layer is the output layer, and a middle layer is the hidden layer. A neural network with a plurality of hidden layers is called a deep neural network (deep neural network, DNN). Work at each layer of the neural network may be described according to a mathematical expression $\vec{y} = a(W \cdot \vec{x} + b)$. Work at each physical layer of the neural network may be understood as completing transformation from input space to output space (that is, from row space to column space of a matrix) by performing five operations on the input space (a set of input vectors). The five operations include: 1. dimension increase/dimension reduction; 2. zooming in/out; 3. rotation; 4. translation; and 5. "bending". The operations 1, 2, and 3 are completed by "$W \cdot \vec{x}$", the operation 4 is completed by "$ + b$", and the operation 5 is implemented by "$a()$". The word "space" is used herein for expression because a classified object is not a single thing, but a type of thing. Space is a set of all individuals of such a type of thing. $W$ is a weight matrix of each layer of the neural network, and each value in the matrix indicates a weight value of one neuron at the layer. The matrix $W$ determines space transformation from the input space to the output space described above. In other words, $W$ at each layer of the neural network controls how to transform space. A purpose of training the neural network is to finally obtain a weight matrix at all layers of a trained neural network. Therefore, a training process of the neural network is essentially a manner of learning control of space transformation, and more specifically, learning a weight matrix.

(10) Loss function (loss function)

During training of the neural network, because it is expected that an output of the neural network is as close as possible to a value that is actually expected to be predicted, a current prediction value of the network may be compared with a target value that is actually expected, and then a weight matrix at each layer of the neural network is updated based on a difference between the current prediction value and the target value (there is usually an initialization process before the first update, that is, a parameter is preconfigured for each layer of the neural network). For example, if the prediction value of the network is large, the weight matrix is adjusted to lower the prediction value until the neural network can predict the target value that is actually expected. Therefore, "how to obtain the difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

In a training process of a neural network, a value of a parameter of a neural network model may be corrected by using an error back propagation (back propagation, BP) algorithm, so that a reconstruction error loss of the neural network model becomes increasingly smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

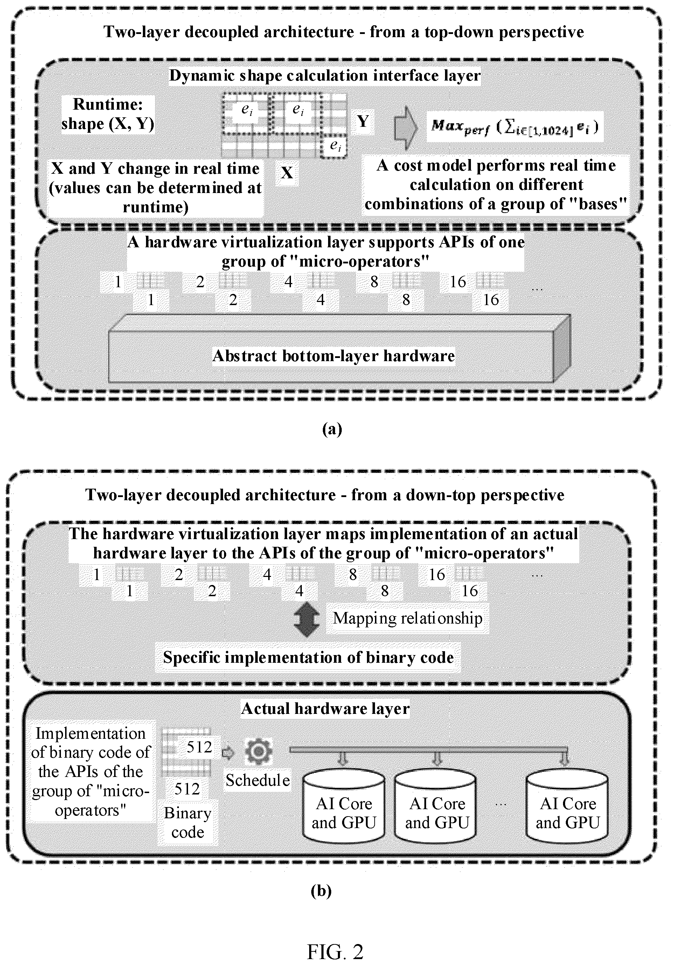

First, a system architecture provided in an embodiment of this application is described. For details, FIG. 2 is a schematic diagram of a dynamic shape decoupled architecture according to an embodiment of this application. A sub-schematic diagram (a) in FIG. 2 shows a two-layer decoupled architecture from a top-down perspective. An upper layer is a dynamic shape calculation interface layer, a lower layer is a hardware virtualization layer, and the hardware virtualization layer supports application programming interfaces (application programming interfaces, APIs) of one group of micro-operators. From an output perspective, a shape of a to-be-output tensor at the dynamic shape calculation interface layer dynamically changes in a runtime process, which may be denoted as a shape (X, Y), where X and Y change in real time. However, values of X and Y can be determined at the runtime. In this case, the shape (X, Y) of the determined value may be obtained by combining one or more micro-operators in a micro-operator library (namely, the group of micro-operators), and each micro-operator in the micro-operator library may be considered as a "basis" of "shape space". Then, running costs of different combinations of a group of "bases" may be calculated in real time by using a cost model. The hardware virtualization layer includes abstract bottom-layer hardware, and stores the micro-operator library, for example, micro-operators 1 * 1, 2 * 2, ... shown in the sub-schematic diagram (a). A sub-schematic diagram (b) in FIG. 2 shows a two-layer decoupled architecture from a down-top perspective. The hardware virtualization layer maps implementation of an actual application layer to the APIs of the group of micro-operators. The actual hardware layer may include physical hardware such as an AI core and a graphics processing unit (graphics processing unit, GPU), and is configured to execute binary code of one group of micro-operators finally selected by the cost model.

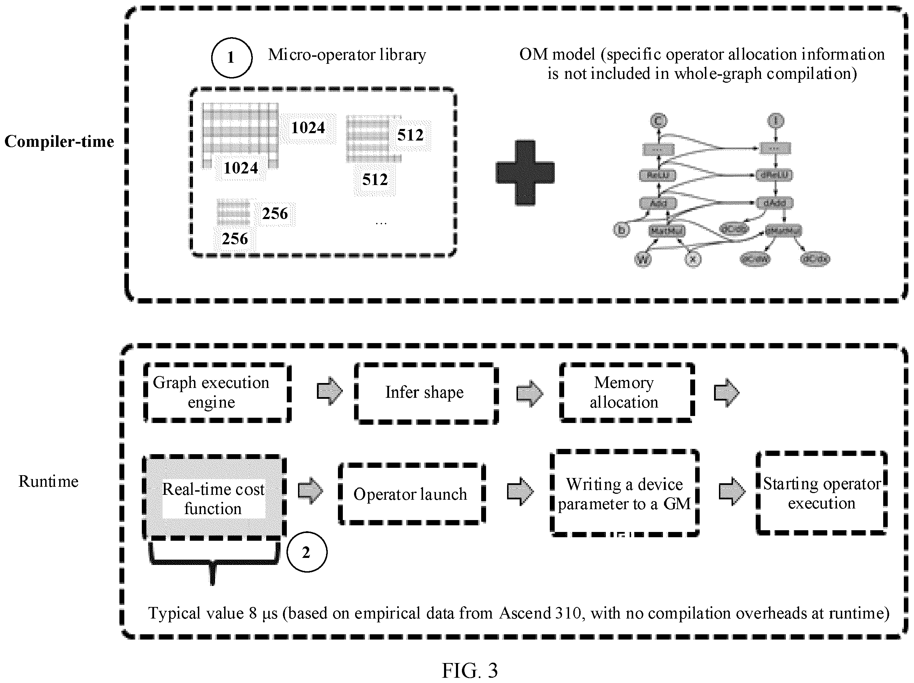

It should be noted that an actual implementation product form of this application may be a software form, or may be a hardware form. This is not specifically limited in this application. For ease of description, the following uses an example in which the product form is the software form for description. Specifically, refer to FIG. 3. In some implementations of this application, a software product form in this embodiment of this application may include two parts: a micro-operator library (which may also be referred to as an operator code library, a binary code library, and the like) and a real-time cost model. The two parts may be separately deployed on a CPU (for example, an AI CPU) of a computer device, namely, a host end. The following separately describes the two parts.

(1) Micro-operator library

In this embodiment of this application, the micro-operator library may be a single-kernel micro-operator library, or may be a multi-kernel micro-operator library. This is not specifically limited in this application. The single-kernel micro-operator library means that each micro-operator in the micro-operator library is implemented as single-kernel code.

The micro-operator library may support a plurality of different types of operators, for example, operator operations of a convolution operation, matrix multiplication, and vector addition. However, it should be noted that operators in a same micro-operator library are of a same operator type. These operators are packaged in a micro-operator library of a type to which the operators belong in a form of binary code of one group of micro-operators. To be specific, for a convolution operator, binary code of one group of convolution micro-operators of fixed shapes and different shapes is implemented, for example, 1 * 1, 2 * 2, 4 * 4, ..., or 512 * 512 convolution micro-operators that support calculation. However, it should be noted that these micro-operators of different shapes need to have the following features: a. The binary code can be implemented; b. Each micro-operator has a fixed and different shape; c. The micro-operators are independent of each other and have their own attribute information, such as bandwidth and a throughput.

(2) Real-time cost model

In the foregoing implementation of this application, any shape of a to-be-output tensor can be obtained by using one or more combinations in the micro-operator library in "real time". Different combinations have different calculation performance. Therefore, one "real-time" cost model is required to obtain a combination with optimal performance through calculation based on an attribute of each operator, and finally execute a micro-operator included in the combination with the optimal performance.

The real-time cost model may be embedded in a standard operator launch and execution process in a form of one independent module. As shown in FIG. 3, the standard operator launch and execution process includes: a graph execution engine → infer shape → memory allocation → real-time cost model → operator launch → writing a device parameter to a GM → starting operator execution. The real-time cost model is located between initiating an operator calculation operation by the graph execution engine and formally launching an operator to each device. There are two pieces of input information of the real-time cost model: the micro-operator library and shape information of the to-be-output tensor. A main function of the real-time cost model is to use one or more fixed shape micro-operators in the micro-operator library in real time, to complete a combination of any shape (namely, a dynamic shape) of the to-be-output tensor, and select a micro-operator included in a combination (for example, a combination with optimal performance) for execution.

It should be noted herein that the execution process is executed by a GPU (for example, an AI Core) of the computer device by starting an operator, and the AI core is also referred to as a device end. After an AI CPU selects, based on the real-time cost model, the micro-operator to be finally executed included in the combination, the micro-operator is launched to the AI core, and the AI core performs a specific micro-operator execution operation.

It should be noted that, in some implementations of this application, the real-time cost model may be further divided into the following three modules.

(1) Combiner: The combiner uses the one or more fixed shape micro-operators in the micro-operator library in real time, to complete the combination of any shape (namely, the dynamic shape) of the to-be-output tensor, where there may be one or more combinations.

(2) Cost model: The cost model uses a combiner result as an input, and determines a specific combination whose calculation performance meets a preset condition (for example, optimal calculation performance) in a plurality of different combinations through calculation based on an attribute (for example, bandwidth or a throughput) of each micro-operator.

(3) Device parameter calculation: A combination output by the cost model is micro-operators that are to be scheduled to each device (device) (for example, a GPU) and are actually executed. Therefore, a corresponding parameter needs to be calculated for each device (device), to achieve an objective of calculating binary code of a corresponding micro-operator.

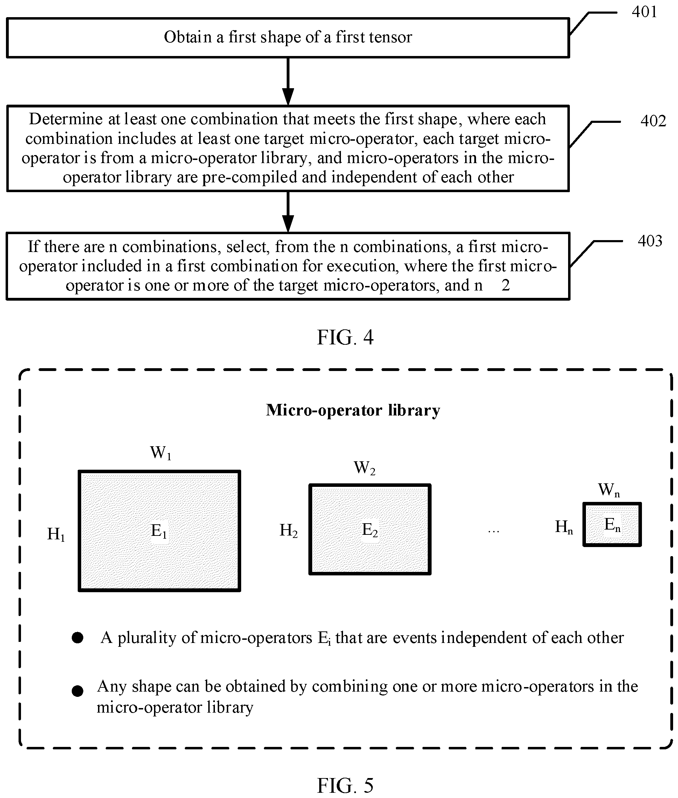

Based on the foregoing system architecture, the following describes in detail an operator processing method provided in an embodiment of this application. Specifically, FIG. 4 is a schematic flowchart of an operator processing method according to an embodiment of this application. The method may specifically include the following steps.

401: Obtain a first shape of a first tensor.

First, a computer device may obtain a shape of a to-be-output tensor (that is, from an output perspective) by using a CPU (namely, a host end), where the to-be-output tensor may be referred to as the first tensor. A shape of the first tensor dynamically changes in a dynamic shape scenario. To be specific, the first tensor is a dynamic shape tensor to be output, and a specific value of the shape of the first tensor is determined only at runtime. The shape with the specific value is referred to as the first shape of the first tensor.

It should be noted that, in this embodiment of this application, the computer device may include a handheld terminal device, for example, a mobile phone, a computer, or an iPad, or may include a smart wearable device, for example, a smart band, a smart watch, or a smart heart rate meter, or may include a wheeled mobile device, for example, a vehicle (for example, an autonomous driving vehicle), an aircraft, or a robot (for example, a robotic vacuum cleaner). A specific product form of the computer device is not limited in this application. Any electronic device that can be used to perform the operator processing method in this application may be referred to as the computer device.

402: Determine at least one combination that meets a first shape, where each combination includes at least one target micro-operator, each target micro-operator is from a micro-operator library, and micro-operators in the micro-operator library are pre-compiled and independent of each other.

After obtaining the first shape of the to-be-output first tensor, the computer device further determines the at least one combination that meets the first shape. Each combination includes at least one target micro-operator, and the target micro-operators are from a same micro-operator library. It should be noted herein that micro-operators in the micro-operator library are pre-compiled micro-operators, and the micro-operators are event independent of each other. It should be noted that in some implementations of this application, any shape of the tensor can be obtained by combining one or more micro-operators in the micro-operator library. In other words, the micro-operator library has completeness of "solution space", and each micro-operator in the micro-operator library may be considered as a "basis" of "shape space". In this embodiment of this application, the micro-operators in the micro-operator library are pre-compiled and only micro-operators with optimal performance are selected. Therefore, a compiler is not needed at runtime, and only an appropriate target micro-operator needs to be selected from the micro-operator library for combination. This reduces compilation overheads.

It should be noted that, in some implementations of this application, each micro-operator in the micro-operator library has a fixed shape, and different micro-operators have different shape sizes. For ease of understanding, the following provides an example for illustration. Specifically, FIG. 5 is a schematic diagram of a micro-operator library according to an embodiment of this application. The following uses an example in which all micro-operators in the micro-operator library are second-order tensors (namely, matrices) for description. The micro-operator library totally includes n micro-operators: $E_1$, $E_2$, ..., and $E_n$. A shape of the micro-operator $E_1$ is $H_1 * W_1$, a shape of the micro-operator $E_2$ is $H_2 * W_2$, ..., and a shape of the micro-operator $E_n$ is $H_n * W_n$. Generally, $H_1 \neq H_2 \neq ... \neq H_n$, and/or $W_1 \neq W_2 \neq ... \neq W_n$. However, in a special case, some Hs are equal, or some Ws are equal. This is not limited in this application, provided that each micro-operator has the fixed and different shape.

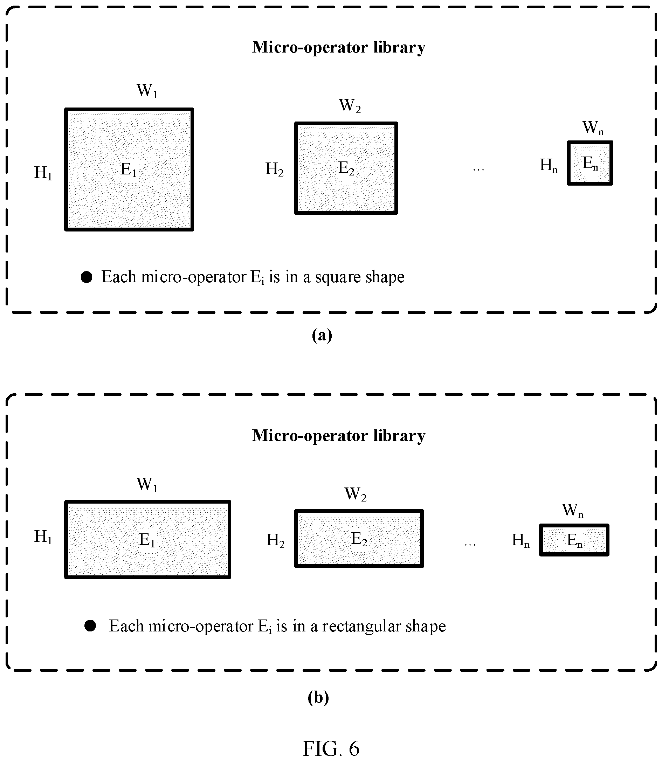

It should be noted that, in some implementations of this application, shapes of the micro-operators in the micro-operator library are fixed and different, but particular. In this embodiment of this application, it is assumed that all the micro-operators in the micro-operator library are second-order tensors, so that all the micro-operators in the micro-operator library may be in a square shape, or may be in a rectangular shape, or may include both a square and a rectangle. This is not limited in this application, provided that any shape of the tensor can be obtained by combining the one or more micro-operators in the micro-operator library. FIG. 6 is a schematic diagram of a specific shape of a micro-operator included in a micro-operator library according to an embodiment of this application. A sub-schematic diagram (a) in FIG. 6 indicates that each micro-operator in the micro-operator library is in a square shape, to be specific, $H_1 =$

$W_1$, $H_2 = W_2$, ..., and $H_n = W_n$. A sub-schematic diagram (b) in FIG. 6 indicates that each micro-operator in the micro-operator library is in a rectangle shape, to be specific, $H_1 \neq W_1$, $H_2 \neq W_2$, ..., $H_n \neq W_n$. In an example, a value of each H may be a half, a quarter, or the like of a corresponding W, to be specific, $H_1 = 1/2\ W_1$, $H_2 = 1/2\ W_2$, ..., $H_n = 1/2\ W_n$, or $H_1 = 1/4\ W_1$, $H_2 = 1/4\ W_2$, ..., $H_n = 1/4\ W_n$, and the like. In another example, a value of each W may be a half, a quarter, or the like of a corresponding H, to be specific, $1/2\ H_1 = W_1$, $1/2\ H_2 = W_2$, ..., $1/2\ H_n = W_n$, or $1/4\ H_1 = W_1$, V4 $H_2 = W_2$, ..., $1/4\ H_n = W_n$, and the like. Specifically, a specific rectangle shape of each micro-operator in the micro-operator library is not limited in this application. Similarly, in this embodiment of this application, it is assumed that all the micro-operators in the micro-operator library are third-order tensors, so that all the micro-operators in the micro-operator library may be in a polyhedron shape, for example, may be in a cube shape, or may be in a cuboid shape, or may include both a cube and a cuboid. This is not limited in this application, provided that any shape of the tensor can be obtained by combining the one or more micro-operators in the micro-operator library. A case of a higher-order tensor is similar, and details are not described herein.

In addition, it should be further noted that, in this embodiment of this application, the micro-operator library is obtained based on at least one candidate micro-operator library that is constructed in advance, and operator types of micro-operators from a same micro-operator library are the same. For example, it is assumed that there are three micro-operator libraries (namely, candidate micro-operator libraries) deployed on a computer device: micro-operator libraries A, B, and C. The micro-operator library A is used to perform a convolution operation, the micro-operator library B is used to perform a matrix multiplication operation, and the micro-operator library C is used to perform a vector addition operation. In this case, each micro-operator in the micro-operator library A is a convolution operator, and each micro-operator in the micro-operator library B is a matrix multiplication operator, each micro-operator in the micro-operator library C is a vector addition operator. It is also assumed that a currently ongoing task is a training process of a convolutional neural network, and a currently invoked micro-operator library is the micro-operator library A in the foregoing three micro-operator libraries that are constructed in advance on the computer device (if the computer device has only one micro-operator library, the currently invoked micro-operator library can only be the one micro-operator library). It should be noted herein that, in this embodiment of this application, the micro-operator library may be a single-kernel micro-operator library, or may be a multi-kernel micro-operator library. This is not specifically limited in this application. The single-kernel micro-operator library means that each micro-operator in the micro-operator library is implemented as single-kernel code.

It should be further noted that, in some implementations of this application, because each micro-operator in the micro-operator library has a fixed shape (namely, a static shape), each micro-operator may be continuously optimized to obtain optimal performance, and a micro-operator with optimal performance is added to the micro-operator library, that is, each micro-operator in the micro-operator library is selected from at least two candidate micro-operators, shapes of the at least two candidate micro-operators are the same, and the at least two candidate micro-operators are pre-compiled.

In an example, a selection manner may include: calculating performance of each candidate micro-operator based on attribute information of each candidate micro-operator, and using a target candidate micro-operator as one micro-operator in the micro-operator library. The target candidate micro-operator is one candidate micro-operator whose performance meets a preset condition (which may be referred to as a second preset condition). For example, a micro-operator with optimal performance is selected from the candidate micro-operators and added to the micro-operator.

It should be noted that, in some implementations of this application, the attribute information of the candidate micro-operator includes but is not limited to a throughput, occupied bandwidth, and the like. For example, the micro-operator with the optimal performance may be selected from the candidate micro-operators based on two factors: the throughput and the occupied bandwidth. The micro-operator is added to the micro-operator library. In an example, some candidate micro-operators that do not meet a throughput requirement may be first screened out from the candidate micro-operators based on the throughput factor, and then a micro-operator finally added to the micro-operator library is selected from remaining candidate micro-operators based on the bandwidth occupation factor. In another example, different weights may be assigned to the two factors: the throughput and the occupied bandwidth, weighted summation is performed on each candidate micro-operator, and finally, a candidate micro-operator with an optimal result is selected based on a weighted summation result, and added to the micro-operator library. A specific implementation of how to select the micro-operator from the candidate micro-operators and add the candidate micro-operator to the micro-operator library is not limited in this application.

The following describes how to select a micro-operator with optimal performance from at least two candidate micro-operators whose shapes are the same and that are pre-compiled.

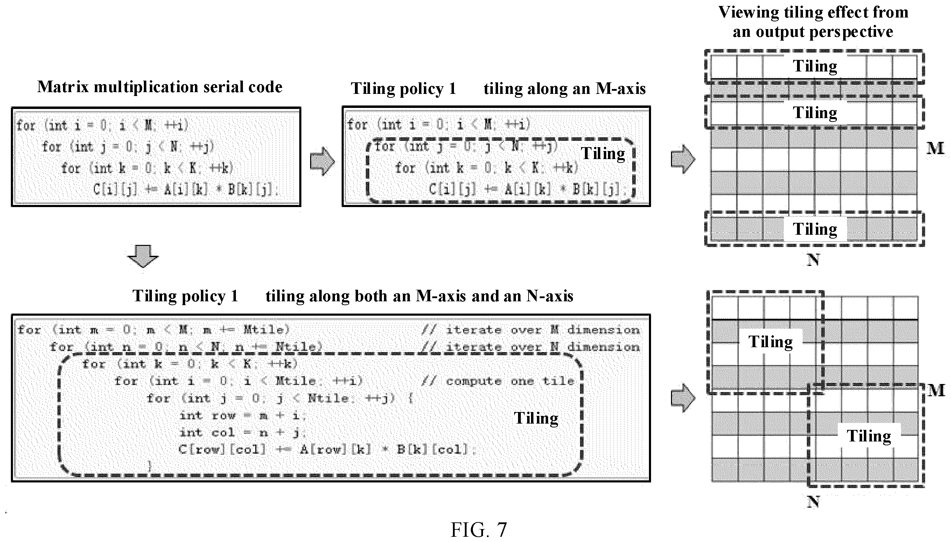

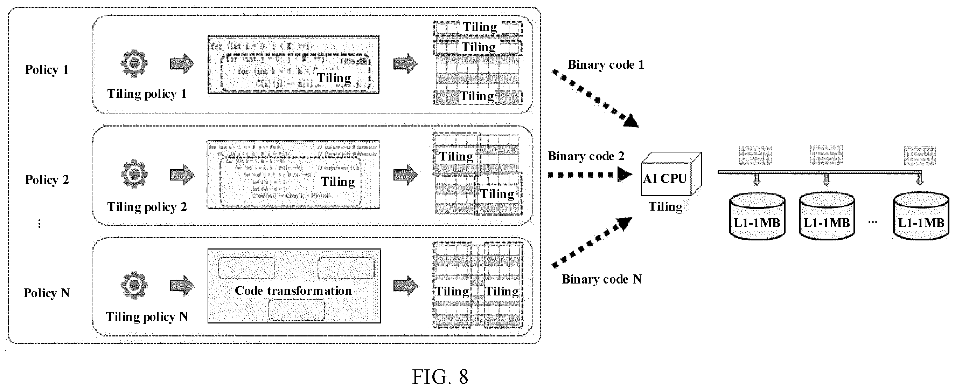

For ease of understanding, the following first uses matrix multiplication as an example to describe a core concept "tiling" of a compilation operator. Specifically, FIG. 7 is a schematic diagram of compiling an operator according to an embodiment of this application. It is assumed that the to-be-output tensor is a second-order tensor, and a shape is M * N. In FIG. 7, the compiler separately performs two different compilation policies on a same matrix multiplication serial code. One is tiling along an M-axis, for example, a first row in FIG. 7, which may be referred to as a tiling policy 1. The other is tiling along both an M-axis and an N-axis, for example, a second row in FIG. 7, which may be referred to as a tiling policy 2. From the output perspective, a tiling arrangement manner obtained through the first compilation manner is shown on the right side of the first row in FIG. 7, and a tiling arrangement manner obtained through the second compilation manner is shown on the right side of the second row in FIG. 7. Performance of operators compiled by using different tiling policies is also different. FIG. 8 still uses a same matrix multiplication serial semantic expression as an example. It is assumed that there are N compilation policies: a policy 1, a policy 2, ..., and a policy N. The policy 1 corresponds to the tiling policy 1, the policy 2 corresponds to the tiling policy 2, ..., and the policy N corresponds to the tiling policy N. Obtained tiling arrangement manners are separately shown in FIG. 8, that is, different policies correspond to different tiling policies, and consequently binary code (binary code) of compilation operators of different versions are generated. N compilation operators (that is, binary code 1 to binary code N) obtained in the N compilation manners are run on hardware. If binary code corresponding to a policy has high performance, it is considered that a compilation operator corresponding to the policy is optimal code, and the compilation operator may be added to the micro-operator library as an optimal fixed shape micro-operator.

403: If there are n combinations, select, from the n combinations, a first micro-operator included in a first combination for execution, where the first micro-operator is one or more of the target micro-operators, and $n \geq 2$.

There may be one or more combinations of target micro-operators that are selected from the micro-operator library, to form the first shape. The following separately describes the combinations.

(1) One combination

If there is one combination, there is no comparison condition, and a micro-operator included in the combination is directly executed. Specifically, an AI CPU of the computer device transfers the micro-operator included in the combination to an AI core, to start a micro-operator execution operation.

(2) N combinations, where $n \geq 2$

If there are n combinations, a micro-operator (which may be referred to as a first micro-operator) included in a first combination is selected from the n combinations for execution. The first micro-operator is one or more of the target micro-operators.

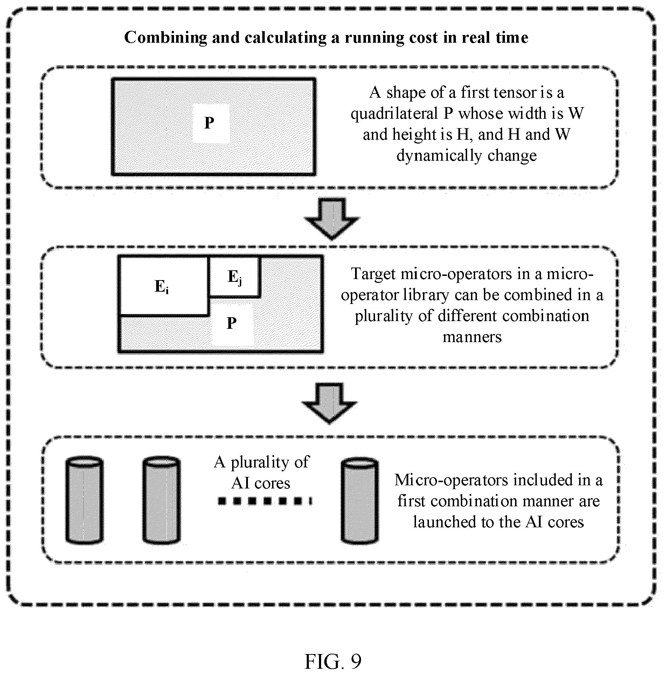

It should be noted that, in some implementations of this application, a final first combination may be selected from the n combinations based on a perspective of a consumed running cost. Specifically, first, a total running cost (cost) of micro-operators included in each of the n combinations can be calculated, to obtain n running costs. Then, one running cost that meets a preset condition (which may be referred to as a first preset condition) is selected from the n running costs as a final running cost (namely, a first running cost). For example, a combination with a smallest running cost value can be selected as the first combination, and finally, the micro-operator (namely, the first micro-operator) included in the first combination corresponding to the first running cost is executed. For a specific process, refer to FIG. 9. FIG. 9 is a schematic diagram of combining and calculating a running cost in real time according to an embodiment of this application. It is assumed that the to-be-output first tensor is a second-order tensor, the shape of the first tensor is a quadrilateral P whose width is W and height is H, and H and W dynamically change. At runtime, each specific shape P can be obtained by combining the micro-operators in the micro-operator library. A plurality of different combinations may form the shape P. Finally, one or more micro-operators included in one of the combinations are selected and launched to M AI cores for execution. In this process, any shape P can be combined in real time, and a specific combination can be obtained through calculation in real time, to obtain optimal performance of P on the AI core.

For ease of understanding the process, the following is an example for illustration. It is assumed that for a specific first shape, there are totally three combinations: a combination 1, a combination 2, and a combination 3. It is assumed that target micro-operators included in the combination 1 include two micro-operators A and one micro-operator B, target micro-operators included in the combination 2 include four micro-operators C and one micro-operator D, and target micro-operators included in the combination 3 include one micro-operator A and three micro-operators E. A total running cost of micro-operators included in each combination is calculated, to separately obtain a running cost 1 corresponding to the combination 1, a running cost 2 corresponding to the combination 2, and a running cost 3 corresponding to the combination 3. Assuming that a value of the running cost 2 is lowest among the three running costs, the four micro-operators C and the one micro-operator D included in the combination 2 corresponding to the running cost 2 may be executed.

It should be noted that, in some implementations of this application, the running cost may be indicated by total duration required to execute micro-operators included in the combination. Specifically, duration required to execute each of m micro-operators included in a target combination is calculated, to obtain m duration, where one micro-operator in the target combination corresponds to one duration. Then, total duration is obtained based on the m duration (that is, the total duration is obtained by adding the m duration), where the target combination is any one of the n combinations, and $m \geq 1$. Finally, total duration is calculated by using each of the n combinations as the target combination, to obtain n total duration.

For ease of understanding the process, the foregoing example is still used for further illustration. It is assumed that for a specific first shape, there are totally three combinations: a combination 1, a combination 2, and a combination 3. It is assumed that target micro-operators included in the combination 1 include two micro-operators A and one micro-operator B, target micro-operators included in the combination 2 include four micro-operators C and one micro-operator D, and target micro-operators included in the combination 3 include one micro-operator A and three micro-operators E. The combination 1 includes the three target micro-operators. Therefore, duration required to execute each micro-operator in the combination 1 may be calculated, totally three duration is obtained, and the three duration is added to obtain total duration A. Similarly, the combination 2 includes the five target micro-operators, five duration may be obtained through calculation, and the five duration is added to obtain total duration B. The combination 3 includes four target micro-operators, and four duration may be obtained through calculation, and the four duration is added to obtain total duration C. Finally, a final combination may be selected by comparing a length of total duration corresponding to a combination.

It should be noted that, in this embodiment of this application, in a specific calculation process, a running cost (cost) of each combination may be calculated based on the following formula (1):

$$Cost = \sum_{i \in [1, maxBase]} \left( \frac{DataVolume(e_i)}{Throughout(e_i)} \times \Pi \frac{Amount(e_i)}{HardwareAICoreNumber} \right) (1)$$

$e_i$ indicates a specific micro-operator in a micro-operator library, for example, a micro-operator of shape 512 * 512. $DataVolume(e_i)$ indicates a total calculation amount of the micro-operator $e_i$, namely, a calculation amount of a floating point (a sum of floating-point multiplication and addition). $Throughout(e_i)$ indicates a throughput of the micro-operator $e_i$, and a unit is FLOPS, that is, "floating point operations per second (floating point of per second, FLOPS)" indicates an amount of floating-point multiplication or addition per second. $\frac{DataVolume(e_i)}{Throughout(e_i)}$ Indicates duration required by a single-core AI core to calculate $e_i$, and a unit is second. $Amount(e_i)$ indicates a quantity of $e_i$ in a current combination. $HardwareAICoreNumber$ indicates a quantity of AI cores in a computer device, for example, Ascend 910 has 32 AI cores. $\Pi$ Indicates rounding up, and rounding up $\frac{Amount(e_i)}{HardwareAICoreNumber}$ indicates a quantity of rounds required to calculate all $e_i$. For example, there are 33 $e_i$ in the current combination, that is, $Amount(e_i)$ =33, and $\frac{Amount(e_i)}{HardwareAICoreNumber}$ is rounded up to 2, that is, "two rounds" are required to complete calculation of all $e_i$. $\frac{DataVolume(e_i)}{Throughout(e_i)} \times \Pi \frac{Amount(e_i)}{HardwareAICoreNumber}$ indicates time required to complete calculation of all $e_i$. Finally, any to-be-calculated first shape may be decomposed into a plurality of micro-operators, for example, x $e_1$, y $e_2$, and z $e_3$. Each $e_i$ (namely, $e_1$, $e_2$, and $e_3$) may obtain duration through calculation based on the foregoing formula (1). Finally, a sum of the time required by the three $e_i$ is obtained, which is final total duration of the micro-operators included in the combination.

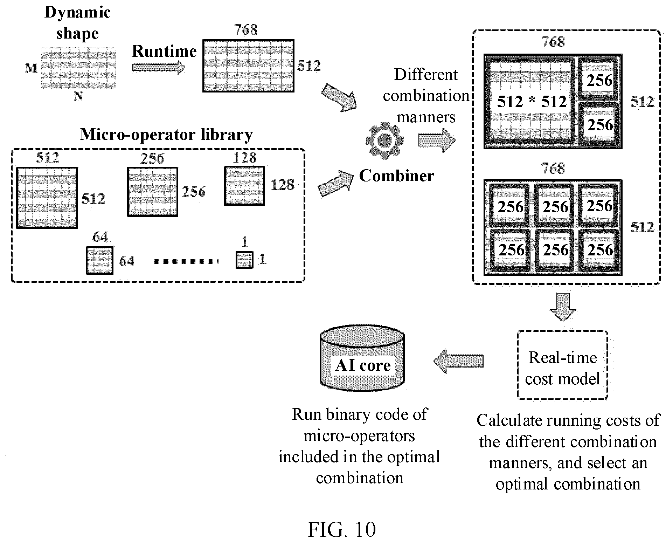

For ease of further understanding of the foregoing process of step 401 to step 403, the following uses a specific instance to describe the operator processing method provided in this embodiment of this application. For an implementation process of the instance, refer to FIG. 10. FIG. 10 is a schematic diagram of an instance of an operator processing method according to an embodiment of this application. In this instance, it is assumed that a to-be-output first tensor is a second-order tensor of dynamic shape M * N, it is assumed that determined values of M and N are respectively 512 and 768 at runtime, and it is assumed that all micro-operators included in a micro-operator library that is constructed in advance are in square shapes (as shown in FIG. 10). These micro-operators are binary code of one group of pre-compiled micro-operators with optimal performance. After it is determined that a current first shape of the first tensor is 512 * 768, a target micro-operator may be selected from the micro-operator library for combination, to form the first shape. This operation may be completed by a combiner. It is assumed that there are two combinations, as shown in FIG. 10. Running costs of micro-operators included in different combinations may be further calculated, and a micro-operator included in a combination with a lowest running cost value is selected as a to-be-executed micro-operator. This operation may be completed by a real-time cost model, and the micro-operator included in the selected target combination is directly run by an AI core.

It should be noted herein that, in the embodiment corresponding to FIG. 10, one combination includes two 256 * 256 micro-operators and one 512 * 512 micro-operator. FIG. 10 shows an arrangement manner, that is, the two 256 * 256 micro-operators are arranged on the right, and the 512 * 512 micro-operator are arranged on the left. In actual application, the two 256 * 256 micro-operators may be arranged on the left, and the 512 * 512 micro-operator may be arranged on the right. A specific arrangement manner of selected target micro-operators is not limited in this application, and is considered as a combination (whether belonging to a same combination is only related to whether quantities and shapes of the selected target micro-operators are the same). Running costs of micro-operators included in an estimation combination are not related to locations of the target micro-operators in the combination, because an operator operation of the micro-operator is not affected by specific data of a real-time tensor, and the data is written in real time.

It should be further noted that, in this embodiment of this application, because micro-operators included in the micro-operator library are used as a "bases" of "shape space", generally, a larger quantity of "bases" indicates more combinations, which means that a micro-operator combination with better performance can be finally selected. However, one disadvantage is that a combination process and a performance estimation process are correspondingly slowed down when a quantity of "bases" is larger. On the contrary, a smaller quantity of "bases" indicates fewer combinations (on a premise that any shape can be obtained through combination), and a corresponding disadvantage is that operator performance is impaired. Therefore, in an actual application process, a compromise needs to be considered. Generally, a quantity of micro-operators in a micro-operator library is less than 10. This also indicates that the micro-operator library constructed in advance in this embodiment of this application only needs to store binary code of only a limited quantity of micro-operators, and any dynamic shape of the first tensor can be obtained through combination in real time at runtime. This avoids high memory overheads and overcoming a problem of poor dynamic shape programmability.

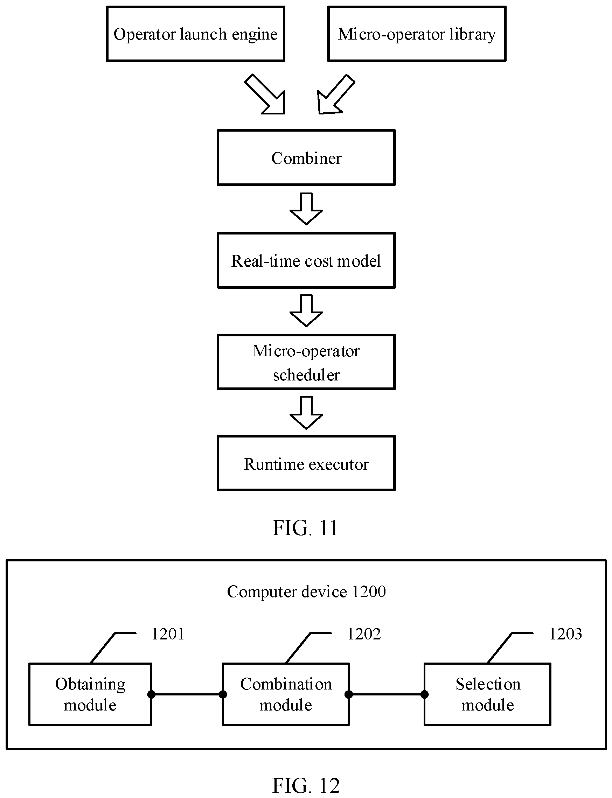

Further, the operator processing method in this embodiment of this application may be applied to an architecture shown in FIG. 11. FIG. 11 is a schematic diagram of an application architecture according to an embodiment of this application. The architecture includes an operator launch engine, a micro-operator library, a combiner, a real-time cost model, a micro-operator scheduler, and a runtime executor. Functions of these modules are as follows: (1) The operator launch engine is an initiator of operator calculation, and knows in real time a specific operator to be calculated and information about the to-be-output tensor (for example, the first shape of the first tensor). (2) The micro-operator library is binary code of one group of pre-compiled optimal micro-operators. (3) The combiner combines, in real time by using the micro-operators in the micro-operator library, to obtain any shape of the first to-be-output tensor. (4) The real-time cost model obtains a specific combination with optimal performance through calculation based on a performance attribute of the micro-operator in real time. (5) The micro-operator scheduler evenly schedules one group of micro-operators in the combination to be executed on bottom-layer multi-cores. (6) The runtime executor initiates execution of each micro-operator in a final target combination.

It should be noted that the operator processing method provided in this embodiment of this application may be applied to various AI chips. For example, for an AI-dedicated chip such as Ascend, a to-be-implemented micro-operator (for example, matrix multiplication) may be selected, and 1 * 1, 2 * 2, 4 * 4, ..., and the like are separately implemented from an output perspective, until single-core matrix operators of fixed shape N * N (the N * N operator is a single-core (Ascend AI Core) micro-operator with highest performance on a target platform, namely, a micro-operator with a largest single-core throughput) form a micro-operator library. These fixed micro-operators can automatically search for code implementation with highest single-core performance by using a tool like auto TVM in advance, compile the code into binary code, and store the binary code in the micro-operator library. Then, in a graph execution engine of a deep neural network (deep neural network, DNN), the combiner, the real-time cost model, and a related device parameter calculation module are separately implemented. The combiner considers various different micro-operator combinations to form a shape of the first to-be-output tensor. The real-time cost model may be implemented based on the formula (1), and is used to obtain a combination with a smallest running cost through calculation in real time. A micro-operator included in the combination with the smallest running cost calculates related parameter information by using the device parameter calculation module, and the micro-operator is launched by the operator scheduler to each AI core for execution.

In this embodiment of this application, a host end (namely, an AI CPU) does not run a compiler (that is, does not perform a specific compilation process), but runs the combiner and the real-time cost model. This reduces compilation overheads. A device end (namely, the AI Core) executes binary code of a fixed shape micro-operator, and each micro-operator has highest single-core performance. Performance, a throughput, and bandwidth usage of each micro-operator are known in advance. This improves overall calculation performance of a system.

Finally, an application scenario of embodiments of this application is described. The operator processing method provided in this embodiment of this application may be applied to a dynamic shape scenario. For example, a common Kalman filtering (constant velocity, CV) model (such as a detection, segmentation, speech model, an automatic speech recognition (Automatic Speech Recognition, ASR) model, or a natural language processing (natural language processing, NLP) model) involves a dynamic shape problem in training and inference, typically for example, an image resolution changes and a batch data size (batch size) changes in picture detection, input lengths of ASR corpus slices are different, and a size of each tensor in a common sparse model in an advertisement recommendation service is also variable. The operator processing method provided in this embodiment of this application may be applied to these application scenarios.

Based on the corresponding embodiments, the following further provides a related computer device used to implement the solutions, to better implement the solutions in embodiments of this application. The computer device may include a handheld terminal device, for example, a mobile phone, a computer, or an iPad, or may include a smart wearable device, for example, a smart band, a smart watch, or a smart heart rate meter, or may include a wheeled mobile device, for example, a vehicle (for example, an autonomous driving vehicle), an aircraft, or a robot (for example, a robotic vacuum cleaner). A specific product form of the computer device is not limited in this application. Any electronic device that can be used to perform the operator processing method in this application may be referred to as the computer device. Specifically, FIG. 12 is a schematic diagram of a structure of a computer device according to an embodiment of this application. The computer device 1200 includes an obtaining module 1201, a combination module 1202, and a selection module 1203. The obtaining module 1201 is configured to obtain a first shape of a first tensor. The combination module 1202 is configured to determine at least one combination that meets the first shape, where each combination includes at least one target micro-operator, each target micro-operator is from a micro-operator library, and micro-operators in the micro-operator library are pre-compiled and independent of each other. Any shape can be obtained by combining one or more micro-operators in the micro-operator library. The selection module 1203 is configured to: if there are n combinations, select, from the n combinations, a first micro-operator included in a first combination for execution, where the first micro-operator is one or more of the target micro-operators, and n ≥ 2.

In a possible design, the selection module 1203 is specifically configured to: calculate a total running cost of micro-operators included in each of the n combinations, to obtain n running costs, select one running cost that meets a first preset condition from the n running costs as a first running cost, and finally execute the first micro-operator included in the first combination corresponding to the first running cost.

In a possible design, if the running cost is indicated by total duration, the selection module 1203 is further specifically configured to: calculate duration required to execute each of m micro-operators included in a target combination, to obtain m duration, obtain total duration based on the m duration, where the target combination is any one of the n combinations, and m ≥ 1, and calculate total duration by using each of the n combinations as the target combination, to obtain n total duration.

In a possible design, each micro-operator in the micro-operator library has a fixed shape, and different micro-operators have different shape sizes.

In a possible design, the micro-operator library is selected from a plurality of candidate micro-operator libraries that are constructed in advance, operator types of micro-operators from different micro-operator libraries are different, and operator types of micro-operators from the same micro-operator library are the same.

In a possible design, the shape of the micro-operator in the micro-operator library includes at least one of the following: a square and a rectangular.

In a possible design, each micro-operator in the micro-operator library is selected from at least two candidate micro-operators, shapes of the at least two candidate operators are the same, and the at least two candidate micro-operators are pre-compiled.

In a possible design of the, a selection manner includes but is not limited to: calculating performance of each candidate micro-operator based on attribute information of each candidate micro-operator, and using a target candidate micro-operator as one micro-operator in the micro-operator library. The target candidate micro-operator is one candidate micro-operator whose performance meets a second preset condition.

In a possible design of the, the attribute information includes at least any one of the following: a throughput and occupied bandwidth.

In a possible design, the first tensor is a dynamic shape tensor to be output.

It should be noted that content such as information exchange and an execution process between the modules/units in the computer device 1200 in FIG. 12 is based on a same concept as the method embodiment corresponding to FIG. 4 in this application. For specific content, refer to the descriptions in the foregoing method embodiments of this application. Details are not described herein again.

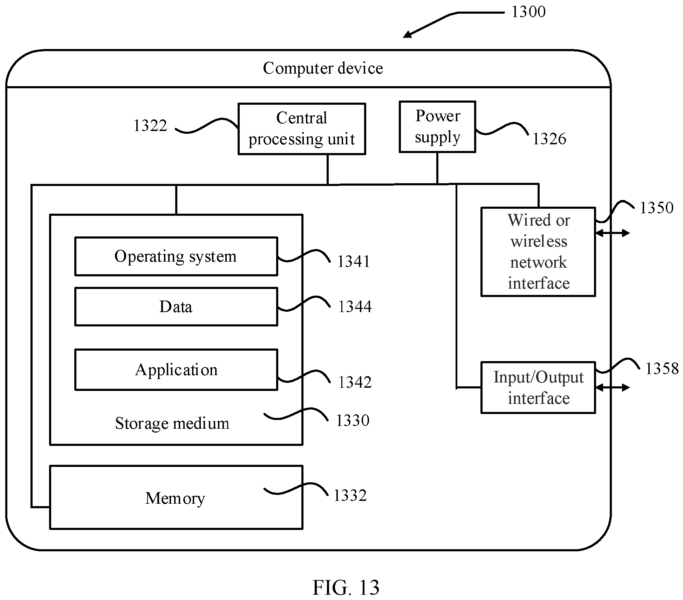

An embodiment of this application further provides a computer device. FIG. 13 is a schematic diagram of a structure of a computer device according to an embodiment of this application. For ease of description, only a part related to this embodiment of this application is shown. For specific technical details that are not disclosed, refer to the method part in an embodiment of this application. The modules described in the embodiment corresponding to FIG. 12 may be deployed on the computer device 1300, to implement the functions of the computer device 1200 in the embodiment corresponding to FIG. 12. Specifically, the computer device 1300 is implemented by one or more servers. The computer device 1300 may have a relatively large difference due to different configurations or performance, and may include one or more central processing units (central processing units, CPU) 1322 and a memory 1332, and one or more storage media 1330 (for example, one or more mass storage devices) that store an application 1342 or data 1344. The memory 1332 and the storage medium 1330 may be for temporary storage or permanent storage. A program stored in the storage medium 1330 may include one or more modules (not shown in the figure), and each module may include a series of instruction operations for the computer device 1300. Further, the central processing unit 1322 may be configured to communicate with the storage medium 1330, and perform, on the computer device 1300, the series of instruction operations in the storage medium 1330.

The computer device 1300 may further include one or more power supplies 1326, one or more wired or wireless network interfaces 1350, one or more input/output interfaces 1358, and/or one or more operating systems 1341, for example, Windows ServerTM, Mac OS XTM, UnixTM, LinuxTM, and FreeBSDTM.

In this embodiment of this application, the central processing unit 1322 is configured to perform the operator processing method in the embodiment corresponding to FIG. 4. For example, the central processing unit 1322 may be configured to obtain a shape of a to-be-output tensor (that is, from an output perspective), where the to-be-output tensor may be referred to as a first tensor. A specific value of the shape of the first tensor is determined only at the runtime. The shape with the specific value is referred to as the first shape of the first tensor. After a first shape of the to-be-output first tensor is obtained, at least one combination that meets the first shape is further determined. Each combination includes at least one target micro-operator, and each target micro-operator is from a same micro-operator library. It should be noted herein that micro-operators in the micro-operator library are pre-compiled micro-operators, and each micro-operator is an event independent of each other. In addition, any shape of the tensor can be obtained by combining one or more micro-operators in the micro-operator library. In other words, the micro-operator library has completeness of "solution space", and each micro-operator in the micro-operator library may be considered as a "basis" of "shape space". In this embodiment of this application, the micro-operators in the micro-operator library are pre-compiled and only micro-operators with optimal performance are selected. Therefore, a compiler is not needed at runtime, and only an appropriate target micro-operator needs to be selected from the micro-operator library for combination. This reduces compilation overheads. There may be one or more combinations of target micro-operators that are selected from the micro-operator library, to form the first shape. If there are n combinations, a micro-operator (which may be referred to as a first micro-operator) included in a first combination is selected from the n combinations for execution. The first micro-operator is one or more of the target micro-operators.

It should be noted that the central processing unit 1322 may be further configured to perform any step in the method embodiment corresponding to FIG. 4 in this application. For specific content, refer to the descriptions in the foregoing method embodiments of this application. Details are not described herein again.

An embodiment of this application further provides a computer-readable storage medium. The computer-readable storage medium stores a program for signal processing. When the program is run on a computer, the computer is enabled to perform the steps performed by the computer device in the descriptions of the foregoing embodiments.

In addition, it should be noted that the described apparatus embodiments are only examples. The units described as separate parts may or may not be physically separate, and parts displayed as units may or may not be physical units, may be located in one place, or may be distributed on a plurality of network units. Some or all of the modules may be selected based on actual requirements to achieve the objectives of the solutions in embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, technical solutions of this application essentially or a part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a training device, a network device, or the like) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the process or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like.

**Claims**

1. An operator processing method, comprising:

   obtaining a first shape of a first tensor;
   determining at least one combination that meets the first shape, wherein each combination comprises at least one target micro-operator, each target micro-operator is from a micro-operator library, and micro-operators in the micro-operator library are pre-compiled and independent of each other; and
   if there are n combinations, selecting, from the n combinations, a first micro-operator comprised in a first combination for execution, wherein the first micro-operator is one or more of the target micro-operators, and $n \geq 2$.

2. The method according to claim 1, wherein the selecting, from the n combinations, a first micro-operator comprised in a first combination for execution comprises:

   calculating a total running cost of micro-operators comprised in each of the n combinations, to obtain n running costs;
   selecting, from the n running costs, one running cost that meets a first preset condition as a first running cost; and
   executing the first micro-operator comprised in the first combination corresponding to the first running cost.

3. The method according to claim 2, wherein the n running costs are n total duration, and the calculating a total running cost of micro-operators comprised in each of the n combinations, to obtain n running costs comprises:

   calculating duration required to execute each of m micro-operators comprised in a target combination, to obtain m duration, and obtaining total duration based on the m duration, wherein the target combination is any one of the n combinations, and $m \geq 1$; and
   calculating total duration by using each of the n combinations as the target combination, to obtain the n total duration.

4. The method according to any one of claims 1 to 3, wherein each micro-operator in the micro-operator library has a fixed shape, and different micro-operators have different shape sizes.

5. The method according to any one of claims 1 to 4, wherein the micro-operator library is selected from a plurality of candidate micro-operator libraries that are constructed in advance, operator types of micro-operators from different micro-operator libraries are different, and operator types of micro-operators from a same micro-operator library are the same.

6. The method according to any one of claims 1 to 5, wherein the shape of the micro-operator in the micro-operator library comprises at least one of the following:
   a square and a rectangular.

7. The method according to any one of claims 1 to 6, wherein each micro-operator in the micro-operator library is selected from at least two candidate micro-operators, shapes of the at least two candidate operators are the same, and the at least two candidate micro-operators are pre-compiled.

8. The method according to claim 7, wherein a selection manner comprises:
   calculating performance of each candidate micro-operator based on attribute information of each candidate micro-operator, and using a target candidate micro-operator as one micro-operator in the micro-operator library, wherein the target candidate micro-operator is one candidate micro-operator whose performance meets a second preset condition.

9. The method according to claim 8, wherein the attribute information comprises at least any one of the following: a throughput and occupied bandwidth.

10. The method according to any one of claims 1 to 9, wherein the first tensor is a dynamic shape tensor to be output.

11. A computer device, comprising:

an obtaining module, configured to obtain a first shape of a first tensor;
a combination module, configured to determine at least one combination that meets the first shape, wherein each combination comprises at least one target micro-operator, each target micro-operator is from a micro-operator library, and micro-operators in the micro-operator library are pre-compiled and independent of each other; and
a selection module, configured to: if there are n combinations, select, from the n combinations, a first micro-operator comprised in a first combination for execution, wherein the first micro-operator is one or more of the target micro-operators, and $n \geq 2$.

12. The device according to claim 11, wherein the selection module is specifically configured to:

calculate a total running cost of micro-operators comprised in each of the n combinations, to obtain n running costs;
select, from the n running costs, one running cost that meets a first preset condition as a first running cost; and
execute the first micro-operator comprised in the first combination corresponding to the first running cost.

13. The device according to claim 12, wherein the n running costs are n total duration, and the selection module is further specifically configured to:

calculate duration required to execute each of m micro-operators comprised in a target combination, to obtain m duration, and obtain total duration based on the m duration, wherein the target combination is any one of the n combinations, and $m \geq 1$; and
calculate total duration by using each of the n combinations as the target combination, to obtain the n total duration.

14. The device according to any one of claims 11 to 13, wherein each micro-operator in the micro-operator library has a fixed shape, and different micro-operators have different shape sizes.

15. The device according to any one of claims 11 to 14, wherein the micro-operator library is selected from a plurality of candidate micro-operator libraries that are constructed in advance, operator types of micro-operators from different micro-operator libraries are different, and operator types of micro-operators from a same micro-operator library are the same.

16. The device according to any one of claims 11 to 15, wherein the shape of the micro-operator in the micro-operator library comprises at least one of the following:
a square and a rectangular.

17. The device according to any one of claims 11 to 16, wherein
each micro-operator in the micro-operator library is selected from at least two candidate micro-operators, shapes of the at least two candidate operators are the same, and the at least two candidate micro-operators are pre-compiled.

18. The device according to claim 17, wherein a selection manner comprises:
calculating performance of each candidate micro-operator based on attribute information of each candidate micro-operator, and using a target candidate micro-operator as one micro-operator in the micro-operator library, wherein the target candidate micro-operator is one candidate micro-operator whose performance meets a second preset condition.

19. The device according to claim 18, wherein the attribute information comprises at least any one of the following: a throughput and occupied bandwidth.

20. The device according to any one of claims 11 to 19, wherein the first tensor is a dynamic shape tensor to be output.

21. A computer device, comprising a processor and a memory, wherein the processor is coupled to the memory;

    the memory is configured to store a program; and
    the processor is configured to execute the program in the memory, to enable the computer device to perform the method according to any one of claims 1 to 10.

22. A computer-readable storage medium, comprising a program, wherein when the program is run on a computer, the computer is enabled to perform the method according to any one of claims 1 to 10.

23. A computer program product comprising instructions, wherein when the computer program product runs on a computer, the computer is enabled to perform the method according to any one of claims 1 to 10.

24. A chip, wherein the chip comprises a processor and a data interface, and the processor reads, through the data interface, instructions stored in a memory, to perform the method according to any one of claims 1 to 10.

FIG. 1

**Two-layer decoupled architecture - from a top-down perspective**

**Dynamic shape calculation interface layer**

**Runtime: shape (X, Y)**

$e_i$ $e_i$ $e_i$

Y

$$Max_{perf}\left(\Sigma_{i\in[1,1024]}\,e_i\right)$$

**X and Y change in real time (values can be determined at runtime)**

X

**A cost model performs real time calculation on different combinations of a group of "bases"**

**A hardware virtualization layer supports APIs of one group of "micro-operators"**

1    2    4    8    16    ...

1    2    4    8    16

**Abstract bottom-layer hardware**

(a)

**Two-layer decoupled architecture - from a down-top perspective**

**The hardware virtualization layer maps implementation of an actual hardware layer to the APIs of the group of "micro-operators"**

1    2    4    8    16    ...

1    2    4    8    16

Mapping relationship

**Specific implementation of binary code**

**Actual hardware layer**

Implementation of binary code of the APIs of the group of "micro-operators"

512

512 Binary code

Schedule

AI Core and GPU    AI Core and GPU    ...    AI Core and GPU

(b)

FIG. 2

① Micro-operator library

OM model (specific operator allocation information
is not included in whole-graph compilation)

Compiler-time

1024

512

1024

512

256

256

...

Runtime

Graph execution
engine ⇨ Infer shape ⇨ Memory
allocation ⇨

Real-time cost
function ⇨ Operator launch ⇨ Writing a device
parameter to a GM ⇨ Starting operator
execution

②

Typical value 8 μs (based on empirical data from Ascend 310, with no compilation overheads at runtime)

FIG. 3

| Obtain a first shape of a first tensor | 401 |

Determine at least one combination that meets the first shape, where each combination includes at least one target micro-operator, each target micro-operator is from a micro-operator library, and micro-operators in the micro-operator library are pre-compiled and independent of each other — 402

If there are n combinations, select, from the n combinations, a first micro-operator included in a first combination for execution, where the first micro-operator is one or more of the target micro-operators, and n    2 — 403

FIG. 4

**Micro-operator library**

$W_1$

$H_1$    $E_1$

$W_2$

$H_2$    $E_2$

...

$W_n$

$H_n$    $E_n$

● A plurality of micro-operators $E_i$ that are events independent of each other

● Any shape can be obtained by combining one or more micro-operators in the micro-operator library

FIG. 5

**Micro-operator library**

$W_1$

$H_1$

$E_1$

$W_2$

$H_2$

$E_2$

...

$W_n$

$H_n$

$E_n$

● Each micro-operator $E_i$ is in a square shape

**(a)**

**Micro-operator library**

$W_1$

$H_1$

$E_1$

$W_2$

$H_2$

$E_2$

...

$W_n$

$H_n$

$E_n$

● Each micro-operator $E_i$ is in a rectangular shape

**(b)**

FIG. 6

**Viewing tiling effect from an output perspective**

**Matrix multiplication serial code**

```
for (int i = 0; i < M; ++i)
    for (int j = 0; j < N; ++j)
        for (int k = 0; k < K; ++k)
            C[i][j] += A[i][k] * B[k][j];
```

**Tiling policy 1    tiling along an M-axis**

```
for (int i = 0; i < M; ++i)
    for (int j = 0; j < N; ++j)
        for (int k = 0; k < K; ++k)
            C[i][j] += A[i][k] * B[k][j];
```
Tiling

Tiling

Tiling

Tiling

M

N

**Tiling policy 1    tiling along both an M-axis and an N-axis**

```
for (int m = 0; m < M; m += Mtile)          // iterate over M dimension
    for (int n = 0; n < N; n += Ntile)       // iterate over N dimension
        for (int k = 0; k < K; ++k)
            for (int i = 0; i < Mtile; ++i)    // compute one tile
                for (int j = 0; j < Ntile; ++j) {
                    int row = m + i;
                    int col = n + j;
                    C[row][col] += A[row][k] * B[k][col];
                }
```
Tiling

Tiling

Tiling

M

N

FIG. 7

FIG. 8

**Combining and calculating a running cost in real time**

P

A shape of a first tensor is a quadrilateral P whose width is W and height is H, and H and W dynamically change

$E_i$    $E_j$    P

Target micro-operators in a micro-operator library can be combined in a plurality of different combination manners

A plurality of AI cores

Micro-operators included in a first combination manner are launched to the AI cores

FIG. 9

**Dynamic shape**

768

M
N

**Runtime** ➡

768
512

➡ Different combination manners

**Combiner** ➡

768
512 * 512  256  256  512

768
256 256 256  512
256 256 256

**Micro-operator library**

512
512  256  256  128  128

64
64  ......  1  1

⬇

**AI core** ⬅ Real-time cost model ⬅

Run binary code of micro-operators included in the optimal combination

Calculate running costs of the different combination manners, and select an optimal combination

FIG. 10

```
┌─────────────────────────┐    ┌─────────────────────────┐
│  Operator launch engine │    │  Micro-operator library │
└─────────────────────────┘    └─────────────────────────┘

              ┌──────────────────────────┐
              │        Combiner          │
              └──────────────────────────┘

              ┌──────────────────────────┐
              │   Real-time cost model   │
              └──────────────────────────┘

              ┌──────────────────────────┐
              │      Micro-operator      │
              │        scheduler         │
              └──────────────────────────┘

              ┌──────────────────────────┐
              │     Runtime executor     │
              └──────────────────────────┘
```

FIG. 11

```
┌─────────────────────────────────────────────────────────────────────┐
│                      Computer device 1200                           │
│                                                                     │
│        ┌─ 1201              ┌─ 1202              ┌─ 1203             │
│  ┌──────────────┐    ┌──────────────┐    ┌──────────────┐           │
│  │  Obtaining   │────│ Combination  │────│  Selection   │           │
│  │   module     │    │   module     │    │   module     │           │
│  └──────────────┘    └──────────────┘    └──────────────┘           │
└─────────────────────────────────────────────────────────────────────┘
```

FIG. 12

FIG. 13

## INTERNATIONAL SEARCH REPORT

| | International application No. |
|---|---|
| | **PCT/CN2022/143087** |

**A. CLASSIFICATION OF SUBJECT MATTER**

G06F 17/15(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, CNPAT, EPODOC, WPI: 基本算子, 算子库, 微算子, 形状, 张量, sensor, shape, operator, sub-operator, AI, comput+

**C. DOCUMENTS CONSIDERED TO BE RELEVANT**

| Category* | Citation of document, with indication, where appropriate, of the relevant passages | Relevant to claim No. |
|---|---|---|
| X | CN 109726822 A (CAMBRICON TECHNOLOGIES CO., LTD.) 07 May 2019 (2019-05-07) description, paragraphs 154-261 | 1-24 |
| A | CN 112947935 A (SHANGHAI SENSETIME INTELLIGENT TECHNOLOGY CO., LTD.) 11 June 2021 (2021-06-11) entire document | 1-24 |
| A | CN 113449857 A (HUAWEI TECHNOLOGIES CO., LTD.) 28 September 2021 (2021-09-28) entire document | 1-24 |
| A | CN 113885871 A (TSINGHUA UNIVERSITY) 04 January 2022 (2022-01-04) entire document | 1-24 |
| A | US 2021027137 A1 (CAMBRICON TECHNOLOGIES CORP., LTD.) 28 January 2021 (2021-01-28) entire document | 1-24 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 February 2023** | **20 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/143087**

| Patent document cited in search report | | | Publication date (day/month/year) | Patent family member(s) | | | Publication date (day/month/year) |
|---|---|---|---|---|---|---|---|
| CN | 109726822 | A | 07 May 2019 | None | | | |
| CN | 112947935 | A | 11 June 2021 | None | | | |
| CN | 113449857 | A | 28 September 2021 | WO | 2021190127 | A1 | 30 September 2021 |
| CN | 113885871 | A | 04 January 2022 | None | | | |
| US | 2021027137 | A1 | 28 January 2021 | EP | 3770824 | A1 | 27 January 2021 |
| | | | | CN | 112308198 | A | 02 February 2021 |

Form PCT/ISA/210 (patent family annex) (July 2022)

**REFERENCES CITED IN THE DESCRIPTION**

**Patent documents cited in the description**

- CN 202210049301